# EUROPEAN PATENT SPECIFICATION

(11) **EP 1 488 961 B1**
(45) Date of publication and mention of the grant of the patent: **31.08.2005**
(21) Application number: 03076887.3
(22) Date of filing: 17.06.2003
(51) Int. Cl.: B60R 21/01, B60R 21/09, B60T 7/06

(54) **System and method for deployment of a pedal release actuator**
System und Methode für das Auslösen eines Pedalfreigabeaktuators
Système et méthode de deploiement d'un actionneur à liberation de pédale

(43) Date of publication of application: 22.12.2004
(73) Proprietor: Ford Global Technologies, Inc., Michigan 48126 (US)
(72) Inventor: Persson, Jörgen, SE-413 22 Göteborg (SE); Gripenland, Mattias, SE-417 03 Göteborg (SE); Larsson, Christian, SE-436 45 Askim (SE); Lindman, Magdalena, SE-449 51 Alafors (SE); Karlsson, Tomas, SE-444 42 Stenungsund (SE); Wallin, Andreas, SE-427 38 Billdal (SE); Tivesten, Emma, SE-428 35 Kallered (SE)
(74) Representative: Hammond, Andrew David

(56) References cited:
- DE-A- 19 961 799
- DE-C- 19 617 372
- US-A1- 2003 085 810
- US-B1- 6 519 519

## Description

### TECHNICAL FIELD

The present invention relates to a foot-pedal release/retraction system for a vehicle and a method for determining whether to deploy an actuator of a foot-pedal release/ retraction system.

### BACKGROUND OF THE INVENTION

Modern vehicles are designed to protect vehicle occupants in the event of a collision between the vehicle and a foreign object, such as another vehicle, or a fixed object such as a tree, lamppost, etc. To this end, modern vehicles are equipped with various safety-related features that may be deployed if a collision occurs. Examples of such safety-related features include airbags and curtains, pyrotechnic seatbelt tensioners, seat adjusters which adjust the seats to a more collision-favourable position, automatic emergency service call-up, etc.

On the driver's side of the passenger compartment of a vehicle, foot-pedals are provided in a footwell. In the event of a collision, there exists a risk that the footwell deforms to such an extent that one or both feet of the driver be injured by the pedals. Even if the footwell iteslf does not deform to any great extent, there exists a risk that the driver's foot or feet be thrown towards the pedals due to the acceleration forces on the foot or feet which arise during a collision.

In an attempt to reduce the risk of foot injury caused by pedals, it has been proposed to provide a triggering system which, in the event of a collision, releases or retracts the pedal from its mounting. In this manner, the pedal offers less resistance to forces acting on it by the driver's foot and hence the risk of injury to the foot or feet is reduced significantly. Such a system is mentioned in DE-A-1 99 61 799. The document discloses the preamble of claim 1. However, once a pedal has been released or retracted, the driver no longer has full control over the vehicle. Furthermore, from a cost point of view it is undesirable to release/retract a pedal unless absolutely necessary.

### SUMMARY OF THE INVENTION

It is therefore an object of the present invention to provide a foot-pedal release/retraction system for a vehicle, which system is capable of more efficiently determining whether to deploy an actuator for releasing/retracting a foot-pedal.

In accordance with the present invention, this object is achieved by a foot-pedal release/retraction system for a vehicle, the system comprising at least one foot-pedal; an actuator associated with the foot-pedal for releasing/retracting the foot-pedal; a foot sensor associated with the foot-pedal to ascertain whether a foot of a vehicle operator is on the pedal; and a system control unit arranged to communicate with the foot sensor and the actuator. The system control unit is further arranged to receive data indicating that a collision between the vehicle and a foreign object is imminent, this data comprising information relating to the anticipated severity of the collision. Upon receiving this data, the system control unit is arranged to communicate with the foot sensor to ascertain whether a foot of the vehicle operator is on a foot-pedal and, dependent on at least some of the information relating to the anticipated severity of the collision, to determine whether to deploy the actuator for releasing/retracting the foot-pedal.

It is a further object of the present invention to provide a method for determining whether to deploy an actuator of a foot-pedal release/retraction system in a vehicle in the event of an imminent collision between the vehicle and a foreign object, which method more efficiently determines whether to deploy the actuator.

This further object is achieved in accordance with the present invention by a method for determining whether to deploy an actuator of a foot-pedal release/retraction system in a vehicle in the event of an imminent collision between the vehicle and a foreign object. The method comprises the steps of:
gathering information relating to the anticipated severity of the collision;
determining whether a foot of a vehicle operator is on a foot-pedal, and, dependent on whether a foot is on a foot-pedal and at least some of the information relating to the anticipated severity of the collision, determining whether to deploy the actuator for releasing/retracting the foot-pedal.

The system and method of the present invention are based on the insight that the risk of injury to the foot or feet of the operator of a vehicle is dependent i.a. on whether the operator has his/her foot/feet on one or more of the pedals in the event of an imminent collision between the vehicle and a foreign object, as well as on the anticipated severity of the collision. Thus, the present invention makes use of data relating to these variables to thereby determine whether to deploy the actuator to release/retract one or more foot-operated pedals.

Preferred embodiments of the system and method of the present invention are detailed in the respective dependent claims.

### BRIEF DESCRIPTION OF DRAWINGS

The invention will be described in greater detail in the following by way of example only and with reference to the attached drawings, in which:
- Fig. 1: is a schematic view of a vehicle equipped i.a. with the system of the present invention;
- Fig. 2: is a schematic bock diagram illustrating various components which may be utilised in the present invention;
- Fig. 3: is a flow chart illustrating various steps of a method which may be applied to the present invention;
- Fig. 4: is a plot of delta velocity (dV) versus time (t) for a second threshold determination;
- Fig. 5: is a plot of delta velocity (dV) versus time (t) for a third threshold determination, and
- Fig. 6: is a flow chart of the method according to an embodiment of the present invention.

### DETAILED DESCRIPTION OF PREFERRED EMBODIMENTS

As required, detailed embodiments of the present invention are disclosed herein; however, it is to be understood that the disclosed embodiments are merely examples of the invention that in accordance with the claims may be further embodied in various and alternative forms other than described below. The drawings are not necessarily to scale, and some features and elements because of simplicity illustrated as blocks may be exaggerated or minimized.

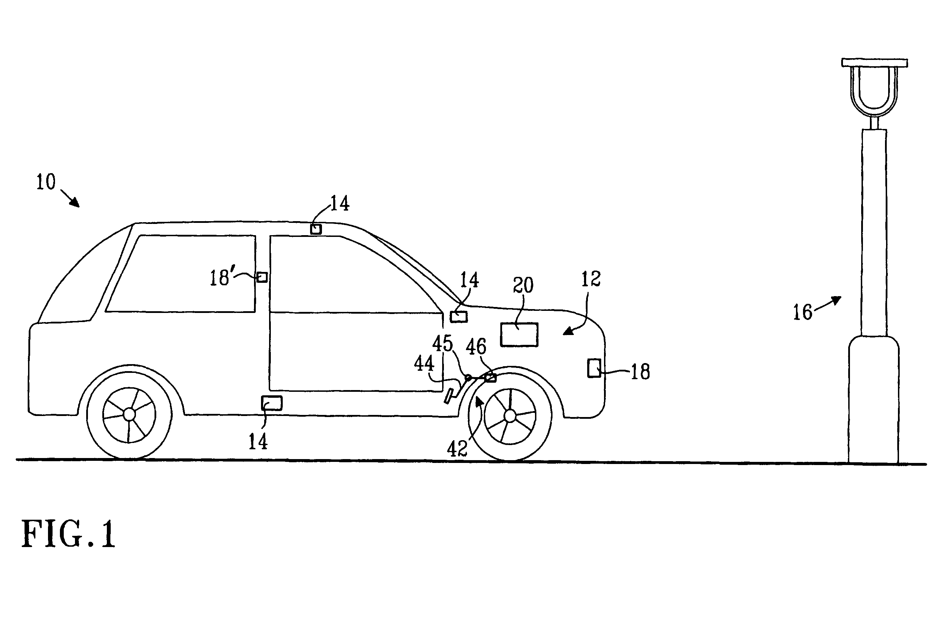

In Fig. 1, reference numeral 10 generally denotes a vehicle equipped with a system, generally denoted by 12, for determining whether and/or when to activate one or more safety-related features 14 of the vehicle in the event of an imminent collision between the vehicle and a foreign object 16. In the drawing, the foreign object 16 is depicted as a lamppost, though it is to be understood that the foreign object may be constituted by any stationary or moving object above a certain size. Examples of such objects include other vehicles, pedestrians, cyclists, prams, signposts, buildings, bridge supports, crash barriers, etc. However, small animals such as rodents, small stones, puddles and the like are not normally to be considered as detectable foreign objects. Similarly, the safety-related features 14 of the vehicle have been illustrated in Fig. 1 in a purely schematic manner. In reality, these features may be constituted by, for example, airbags and curtains, pyrotechnic seatbelt tensioners, seat adjusters which adjust the seats to a more collision-favourable position, automatic emergency service call-up, steering-wheel retractors, automatic braking and the like. In the present invention, the safety-related feature is constituted by a foot-pedal release/retraction arrangement, generally denoted by 42.

By the expression "imminent collision" it is meant that the system 12 has determined that a collision is unavoidable and that impact is to be expected within a fraction of one second.

The system 12 comprises detecting means 18 for determining the position of the foreign object 16 relative to the vehicle 10 and for determining the relative velocity between the vehicle and the foreign object. The detecting means 18 may be constituted by one or more pre-crash sensors typically operating with laser technology, though other suitable sensor technology (fulfilling safety requirements, etc.) based on radar or infrared could be provided instead. Any suitable sensor measuring, for instance, clearance to forward vehicles, motions thereof and providing information relating to the position of such vehicles can thus be employed. For example, one or more sensors including also cruise control features could be provided instead or in combination with the described pre-crash sensor(s).

However, because of simplicity, in the following, only a laser sensor (a so-called "Cv" sensor) will be described, but without any intention to limit the invention to this particular type of sensor.

The detecting means 18 are typically mounted at the front of the vehicle so that foreign objects in the direction of normal travel of the vehicle may be detected. It is to be understood, however, that the expression "detecting means" is intended to encompass sensors mounted at any location on the vehicle. For example, so-called "B-pillar" sensors may be provided, as schematically denoted by reference sign 18 in Fig. 1, preferably in combination with one or more forward-facing pre-crash sensors. As its name implies, a B-pillar sensor is mounted on the B-pillar of the vehicle and can provide x-direction acceleration measurements in a conventional way, for instance by means of accelerometers. Such sensors may be used to give still better information, as in this case to provide optimal offset detection. However, since such sensors are of conventional type, the function thereof will not be described in any further detail.

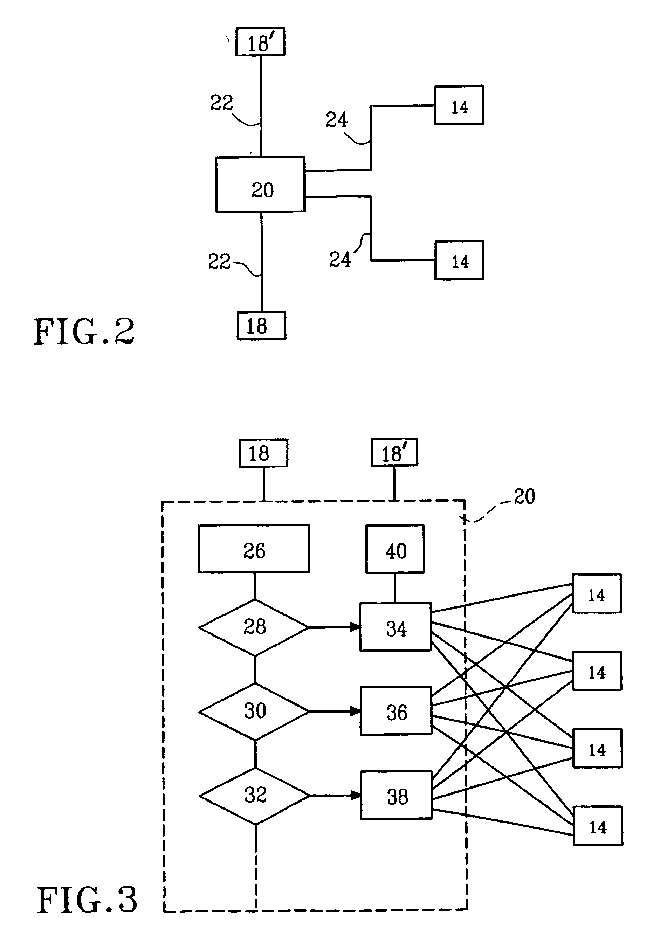

The system 12 further comprises a system control unit 20 arranged to communicate with the detecting means 18, 18'. As is most clearly illustrated in Fig. 2, the system control unit 20 is arranged to receive data from the detecting means relating to the position and the relative velocity of a foreign object with respect to the vehicle. The detecting means 18, 18' are arranged to communicate with the system control unit via any suitable first communication link 22, for example a data bus or wireless path such as attained by using "bluetooth" technology. Based on at least some of the data received from the detecting means 18, 18', the system control unit 20 is arranged to determine whether and/or when to emit a signal to activate one or more safety-related features 14. To this effect, the system control unit 20 communicates with the safety-related features via any suitable second communication link 24, for example a data bus or wireless path such as attained by using "bluetooth" technology.

In accordance with the invention which is the subject of our co-pending European patent application entitled "System and method for deployment of a safety-related feature in a vehicle", the system control unit 20 is arranged to dynamically set a discrimination factor dependent on at least some of the data it receives from one or more of the detecting means 18, 18' to thereby vary, dependent on at least some of the data, the passage of time from receiving the data to emitting the signal to activate the safety-related feature or features. Thus, the term "dynamically set" implies that different discrimination factors will be set dependent on at least one variable.

In a particular embodiment of that invention, the discrimination factor is a threshold determination. The threshold determination is an algorithm implemented by the system control unit 20 in response to certain of the collected data from the detecting means meeting predetermined criteria such as, for example, relative velocity range and position of the foreign object with respect to the vehicle. Preferably, the system control unit 20 is arranged to select between a plurality of threshold determinations dependent on the relative velocity of the vehicle with respect to a detected foreign object. Thus, in the method according to the co-pending invention, and as is illustrated schematically in Fig. 3, the detecting means 18, 18' provide the system control unit 20 with data relating to i.a. the relative velocity of the vehicle with respect to a foreign object. The system control unit determines the relative velocity immediately preceding a collision with the foreign object in box 26. In one embodiment, the determined relative velocity is analysed to ascertain within which predetermined relative velocity range it lies. Alternatively, the absolute value of the determined relative velocity may be used. In Fig. 3, three consecutive relative velocity ranges are depicted, namely a first relative velocity range 28, a second relative velocity range 30 and a third relative velocity range 32. However, it is to be understood that the principles of that invention can be applied to a system and method utilising any number of relative velocity ranges or absolute values of relative velocity. Each relative velocity range is associated with a threshold determination 34, 36, 38 respectively. As will be explained in the following, each threshold determination comprises signal emission time delays dependent on the determined position of the foreign object relative to the vehicle.

Thus, and as has been mentioned earlier, the detecting means 18, 18' provide the system control unit 20 with data relating to the position of the foreign object with respect to the vehicle. This information is analysed in box 40 of Fig. 3. Preferably, the detecting means are capable of detecting, and distinguishing between, a full frontal collision, a corner-to-corner collision and an offset collision. Each threshold determination 34, 36, 38 comprises a dedicated signal emission time delay for each of a detected full frontal collision, a corner-to-corner collision and an offset collision. For low relative velocities, for example the first relative velocity range 28 is from 0 to 40 km/h, the first threshold determination 34 may comprise dedicated signal time delays, all of which are infinite. In other words, the system control unit 20 will not emit a signal to activate any of the safety-related features. This means that the system control unit has determined that the type and velocity of impact is such that risk of injury to the vehicle occupant(s) is negligible and that deployment of any safety-related feature could conceivably aggravate injury and/or inflict unnecessary damage to e.g. interior fittings such as the steering wheel or dashboard.

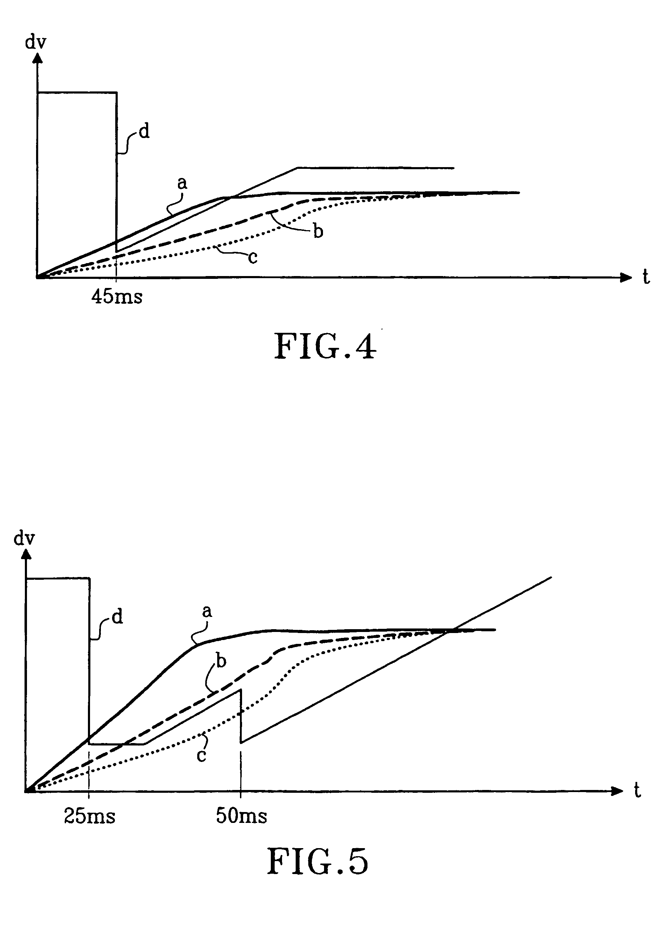

Boxes 36 and 38 of Fig. 3 represent threshold determinations for second and third relative velocity ranges 30, 32 respectively. Each of Figs. 4 and 5 illustrates plots of delta velocity (dV) versus time (t) for a respective threshold determination. Purely by way of example, Fig. 4 relates to a second threshold determination for a relative velocity in the range of about 41 km/h to about 50 km/h, in this case about 45 km/h, and Fig. 5 relates to a third threshold determination for a relative velocity in the range of about 51 km/h to about 65 km/h, in this case about 60 km/h. In each of Figs. 4 and 5, curve (a) represents a full frontal collision, curve (b) a corner-to-corner collision and curve (c) an offset collision. A triggering curve is denoted by (d).

Considering firstly Fig. 4, it will be apparent that curve (a) crosses the triggering curve (d) at a time value of 45 ms. This implies that, for a full frontal collision at a relative velocity of about 45 km/h, the system will set a signal emission time delay of 45 ms. Thus, during this period, the system control unit is given time to collect and process information from various sensors to decide which safety-related feature or features to activate. For example, the system could be arranged to activate an airbag in the steering wheel of the vehicle, but not an airbag in the dashboard on the passenger side of the vehicle, even if a passenger is detected as being present. Of course, each safety-related feature of the vehicle can be ascribed its own dedicated curve for each threshold determination. In this manner, a decision to activate, for example, a seatbelt tensioner may be taken before deciding whether an airbag is to be deployed. Curves (b) and (c) of Fig. 4 show that, for a relative velocity of about 45 km/h and for a corner-to-corner collision and an offset collision, the dedicated signal emission time delay will be infinite, i.e. no safety-related feature will be activated for these types of collision at this velocity.

Turning to Fig. 5, it will be apparent that curve (a) crosses the triggering curve (d) at a time value of 25 ms. In other words, the system has less time to decide which safety-related feature or features to activate in this relative velocity range than in that illustrated in Fig. 4. Curve (b) crosses the triggering curve (d) some 10 ms later, i.e. the system control unit is given more time to collect and process information from various sensors to decide which safety-related feature or features to activate for this type of collision compared to a full frontal collision. Finally, curve (c) crosses the triggering curve (d) at a time value of 50 ms.

A comparison between Fig. 4 and Fig. 5 reveals that, in accordance with a particular embodiment of the method, signal emission time delays of the third threshold determination 38 are, on average, less than the signal emission time delays of the second threshold determination 36. It will also be apparent that the signal emission time delay for a full frontal collision is shorter than for a corner-to-corner collision and an offset collision, thus reflecting the fact that risk of injury is often greater in a full frontal collision.

The system and method described above, and in accordance with the present invention, are eminently suitable for use in a driver crash protection system in which the vehicle is equipped with foot-operated pedals which can be released and/or retracted in the event of a collision. Such an arrangement is schematically illustrated at 42 in Fig. 1, with reference numeral 44 denoting a pedal, reference numeral 45 denoting a foot sensor and reference numeral 46 denoting an actuator for releasing and/or retracting the pedal. The foot sensor is associated with the foot-pedal 44. By this expression it is meant that the foot sensor may be arranged either on, or in the vicinity of, the pedal. For example, if the sensor is a potentiometer, it may be arranged such that it detects the degree of depression of the pedal. This can be achieved by having the sensor arranged about the pivot axis of the pedal or, for example, having the sensor measure the degree of actuation of a component, e.g. hydraulic fluid pressure, influenced by the pedal. Alternatively, the sensor may be a remote sensor using e.g. infra-red to monitor the position of the pedal. Irrespective of the type of foot-sensor, its function is to ascertain whether a foot of the vehicle operator is on the pedal, i.e. if the foot is resting on or depressing the pedal. Although for the sake of clarity only one foot-pedal has been illustrated, it is to be understood that the vehicle may have two or more pedals. Each pedal may have a dedicated sensor and dedicated actuator 46, or the pedal assembly may have one sensor and one or more actuators arranged to release/retract all of the pedals of the assembly substantially simultaneously.

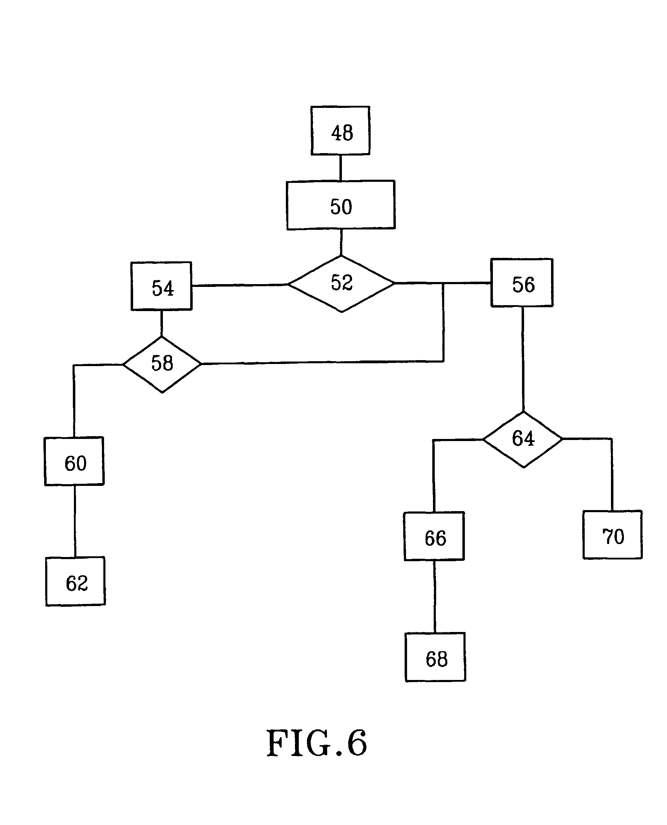

Fig. 6 illustrates the various decision steps which the system control unit 20 has to work through to decide whether and/or when to activate the actuator 46 of the pedal 44. It will be apparent from the following description that the system and method of the present invention utilises i.a. information relating to the anticipated severity of a collision to determine whether or not to deploy the actuator 46 for releasing/retracting one or more of the foot-pedals. This information is collected by the system control unit from one or more of the sensors 18, 18' described above.

In Fig. 6, box 48 represents the system control unit 20 having decided that a collision is imminent. At box 50, the system collects data from one or more of the foot sensors 45 to ascertain whether the driver has his/her foot on a pedal 44. If at box 52 it is determined that a foot is on a pedal, a first sub-routine at 54 is run. This first sub-routine calculates the risk for acceleration-related injuries. The expression "acceleration-related injuries" implies injuries occasioned by the foot or feet of the driver being accelerated towards the pedal as a result of the forces arising during a collision. A decision is taken in this sub-routine in a comparatively short time, typically within 25 ms. If at 52 it is determined that no foot is on a pedal, a second sub-routine at 56 is run. This second sub-routine calculates the risk of pedal intrusion further into the passenger compartment as a result of the imminent collision. A decision is taken in this sub-routine in a comparatively long time, typically within 50 ms. This implies that the system is firstly able to determine the risk for acceleration-related injuries and, if it is determined at 58 that this risk can be ignored, the second sub-routine at 56 is run. If, however, it is determined at 58 that the risk for acceleration-related injuries is present, the system control unit 20 emits a signal at 60 to activate the safety-related feature in the form of the actuator 46 for the pedal 44. Since the pedal has thus been released and/or retracted, the system control unit 20 also activates automatic emergency braking at 62.

In the event that the second sub-routine 56 is run, and it is decided at 64 that there exists a risk of pedal intrusion, the system control unit 20 emits a signal at 66 to activate the safety-related feature in the form of the actuator 46 for the pedal 44. Since the pedal has thus been released and/or retracted, the system control unit 20 also activates automatic emergency braking at 68. If, however, it is decided that the risk of pedal intrusion can be ignored, no signal is sent to the actuator 46, as indicated by box 70.

While preferred embodiments of the invention have been disclosed in detail, it should be understood by those skilled in the art that various other modifications may be made to the illustrated embodiments without departing from the scope of the invention as described in the specification and defined in the appended claims. For instance, the system and method could be used in conjunction with an open-top vehicle to ascertain the need to activate safety-features in addition to the foot-pedal release/retraction arrangement. In the event of imminent roll-over, for example a pyrotechnically released head protector. In such a case, the foreign object recited in the appended claims would be constituted by the road surface.

## Claims

1. A foot-pedal release/retraction system for a vehicle (10), said system comprising:
at least one foot-pedal (44);
an actuator (46) associated with said at least one foot-pedal for releasing/retracting said at least one foot-pedal from its mounting, **characterized by**
a foot sensor (45) associated with said at least one foot-pedal to ascertain whether a foot of a vehicle operator is on said at least one pedal; and
a system control unit (20) arranged to communicate with said foot sensor (45) and said actuator (46), said system control unit further being arranged to receive data indicating that a collision between the vehicle and a foreign object (16) is imminent, said data comprising information relating to the anticipated severity of said collision,
wherein, upon receiving said data, said system control unit (20) is arranged to communicate with said foot sensor (45) to ascertain whether a foot of the vehicle operator is on said at least one foot-pedal (44) and, dependent on at least some of said information relating to the anticipated severity of said collision, to determine whether to deploy said actuator (46) for releasing/retracting said at least one foot-pedal.

2. The system as claimed in claim 1, wherein said system control unit (20) is arranged, upon ascertaining that a foot of the vehicle operator is on said at least one foot-pedal (44), to determine the risk for acceleration-related injuries, and upon determination that a sufficient risk exists, said system control unit is arranged to deploy said actuator (46).

3. The system as claimed in claim 1, wherein said system control unit (20) is arranged, upon ascertaining that no foot of the vehicle operator is on said at least one pedal (44), to determine the risk for intrusion of the at least one-foot pedal further into the vehicle.

4. The system as claimed in claim 1, wherein said system control unit (20) is arranged, upon ascertaining that a foot of the vehicle operator is on said at least one pedal (44), to determine the risk for acceleration-related injuries, and upon determination that an insufficient risk exists, said system control unit is arranged to determine the risk for intrusion of the at least one-foot pedal further into the vehicle.

5. The system as claimed in claim 3 or claim 4, wherein said system control unit, upon determination that a sufficient risk for intrusion exists, is arranged to deploy said actuator (46).

6. The system as claimed in claim 2 or claim 5, wherein said system control unit (20) is further arranged to activate automatic emergency braking (62; 68).

7. The system as claimed in any one of the preceding claims, wherein said data comprising information relating to the anticipated severity of said collision is provided by detecting means (18, 18') capable of detecting, and distinguishing between, a full frontal collision, a corner-to-corner collision and an offset collision.

8. The system as claimed in claim 7, wherein said detecting means comprises at least one sensor (18') for providing x-direction acceleration measurement to said system control unit (20).

9. A method for determining whether to deploy an actuator (46) of a foot-pedal release/retraction system in a vehicle (10) in the event of an imminent collision between the vehicle and a foreign object (16), said method comprising the steps of:
gathering information relating to the anticipated severity of the collision; **characterized in that** the method comprises the further steps of
determining whether a foot of a vehicle operator is on a foot-pedal, and
dependent on whether a foot is on the foot-pedal and at least some of said information relating to the anticipated severity of the collision, determining whether to deploy an actuator for releasing/retracting the foot-pedal from its mounting.

10. The method as claimed in claim 9, whereby if it is determined that a foot is on a foot-pedal, the method further comprises the step of to determining the risk for acceleration-related injuries (54), and deploying said actuator upon determination that a sufficient risk exists (60).

11. The method as claimed in claim 9, whereby if it is ascertained that no foot of the vehicle operator is on said at least one pedal, the method further comprises the step of determining the risk for intrusion of the at least one-foot pedal further into the vehicle (64).

12. The method as claimed in claim 9, whereby if it is ascertained that a foot of the vehicle operator is on said at least one pedal, the method further comprises the step of determining the risk for acceleration-related injuries (54), and upon determination that an insufficient risk exists, the method further comprises the step of determining the risk for intrusion of the at least one-foot pedal further into the vehicle (64).

13. The method as claimed in claim 11 or claim 12, whereby upon determination that a sufficient risk for intrusion exists, the method further comprises the step of deploying said actuator (66).

14. The method as claimed in claim 10 or claim 13, whereby said method further comprises the step of activating automatic emergency braking (62; 68).

## Patentansprüche

1. System zum Lösen/Zurückziehen eines Fußpedals für ein Fahrzeug (10), wobei das System aufweist:
mindestens ein Fußpedal (44),
ein mit dem mindestens einen Fußpedal verbundenes Betätigungselement (46) zum Lösen/Zurückziehen des mindestens einen Fußpedals aus dessen Halterung, **gekennzeichnet durch**
einen Fußsensor (45), der mit dem mindestens einen Fußpedal verbunden ist um festzustellen, ob sich ein Fuß eines Fahrzeugführers auf dem mindestens einen Pedal befindet, und
einen Systemregler (20), der so angeordnet ist, dass er mit dem Fußsensor (45) und dem Betätigungselement (46) in Verbindung steht, wobei der Systemregler außerdem so angeordnet ist, dass er Daten empfängt, die einen drohenden Zusammenstoß zwischen dem Fahrzeug und einem Fremdkörper (16) anzeigen, wobei die Daten Informationen bezüglich der erwarteten Heftigkeit des Zusammenstoßes aufweisen,
wobei der Systemregler (20) nach dem Empfang der Daten so angeordnet ist, dass er mit dem Fußsensor (45) in Verbindung steht um festzustellen, ob sich ein Fuß des Fahrzeugführers auf dem mindestens einen Fußpedal (44) befindet, und in Abhängigkeit von zumindest einigen der Informationen, die sich auf die erwartete Heftigkeit des Zusammenstoßes beziehen, zu bestimmen, ob das Betätigungselement (46) zum Lösen/Zurückziehen des mindestens einen Fußpedals zu bedienen ist.

2. System nach Anspruch 1, **dadurch gekennzeichnet, dass** der Systemregler (20) so angeordnet ist, dass er die Gefahr von beschleunigungsbezogenen Verletzungen bestimmt, nachdem er festgestellt hat, dass sich ein Fuß des Fahrzeugführers auf dem mindestens einen Fußpedal (44) befindet, und dass der Systemregler so angeordnet ist, dass er das Betätigungselement (46) bedient, nachdem er das Vorhandensein einer hinreichend großen Gefahr ermittelt hat.

3. System nach Anspruch 1, **dadurch gekennzeichnet, dass** der Systemregler (20) so angeordnet ist, dass er die Gefahr des weiteren Eindringens des mindestens einen Fußpedals in das Fahrzeug bestimmt, nachdem er festgestellt hat, dass sich kein Fuß des Fahrzeugführers auf dem mindestens einen Pedal (44) befindet.

4. System nach Anspruch 1, **dadurch gekennzeichnet, dass** der Systemregler (20) so angeordnet ist, dass er die Gefahr von beschleunigungsbezogenen Verletzungen bestimmt, nachdem er festgestellt hat, dass sich ein Fuß des Fahrzeugführers auf dem mindestens einen Pedal (44) befindet, und dass der Systemregler so angeordnet ist, dass er die Gefahr des weiteren Eindringens des mindestens einen Fußpedals in das Fahrzeug bestimmt, nachdem er ermittelt hat, dass keine hinreichend große Gefahr vorhanden ist.

5. System nach Anspruch 3 oder Anspruch 4, **dadurch gekennzeichnet, dass** der Systemregler so angeordnet ist, dass er das Betätigungselement (46) bedient, nachdem er das Vorhandensein einer hinreichend großen Gefahr des Eindringens ermittelt hat.

6. System nach Anspruch 2 oder Anspruch 5, **dadurch gekennzeichnet, dass** der Systemregler (20) außerdem so angeordnet ist, dass er die automatische Notbremsung aktiviert (62; 68).

7. System nach einem der vorangehenden Ansprüche, **dadurch gekennzeichnet, dass** die Daten, die Informationen bezüglich der erwarteten Heftigkeit des Zusammenstoßes aufweisen, durch Erfassungsmittel (18, 18') bereitgestellt werden, die die Fähigkeit haben, einen vollen Frontalzusammenstoß, einen Eck-auf-Eck-Zusammenstoß und einen versetzten Zusammenstoß zu erfassen sowie zwischen diesen zu unterscheiden.

8. System nach Anspruch 7, **dadurch gekennzeichnet, dass** das Erfassungsmittel mindestens einen Sensor (18') zur Lieferung von Messwerten der Beschleunigung in X-Richtung an den Systemregler (20) aufweist.

9. Verfahren zur Bestimmung, ob ein Betätigungselement (46) eines Systems zum Lösen/Zurückziehen eines Fußpedals in einem Fahrzeug (10) im Falle eines drohenden Zusammenstoßes zwischen dem Fahrzeug und einem Fremdkörper (16) zu bedienen ist, wobei das Verfahren die folgenden Schritte umfasst:
Sammeln von Informationen bezüglich der erwarteten Heftigkeit des Zusammenstoßes, **dadurch gekennzeichnet, dass** das Verfahren außerdem umfasst die Schritte des
Bestimmens, ob sich ein Fuß eines Fahrzeugführers auf einem Fußpedal befindet, und
Bestimmens, ob ein Betätigungselement zum Lösen/Zurückziehen des Fußpedals aus dessen Halterung zu bedienen ist, in Abhängigkeit davon, ob sich ein Fuß auf dem Fußpedal befindet, und von zumindest einigen der Informationen, die sich auf die erwartete Heftigkeit des Zusammenstoßes beziehen.

10. Verfahren nach Anspruch 9, wonach das Verfahren außerdem den Schritt des Bestimmens der Gefahr von beschleunigungsbezogenen Verletzungen (54) und Bedienens des Betätigungselements nach der Ermitttung des Vorhandenseins einer hinreichend großen Gefahr (60) umfasst, falls bestimmt wird, dass sich ein Fuß auf einem Fußpedal befindet.

11. Verfahren nach Anspruch 9, wonach das Verfahren außerdem den Schritt des Bestimmens der Gefahr des weiteren Eindringens des mindestens einen Fußpedals in das Fahrzeug (64) umfasst, falls festgestellt wird, dass sich kein Fuß des Fahrzeugführers auf dem mindestens einen Pedal befindet.

12. Verfahren nach Anspruch 9, wonach das Verfahren außerdem den Schritt des Bestimmens der Gefahr von beschleunigungsbezogenen Verletzungen (54) umfasst, falls festgestellt wird, dass sich ein Fuß des Fahrzeugführers auf dem mindestens einen Pedal befindet, und das Verfahren außerdem den Schritt des Bestimmens der Gefahr des weiteren Eindringens des mindestens einen Fußpedals in das Fahrzeug (64) umfasst, nachdem ermittelt worden ist, dass keine hinreichend große Gefahr vorhanden ist.

13. Verfahren nach Anspruch 11 oder Anspruch 12, wonach das Verfahren außerdem den Schritt des Bedienens des Betätigungselements (66) umfasst, nachdem ermittelt worden ist, dass eine hinreichend große Gefahr des Eindringens vorhanden ist.

14. Verfahren nach Anspruch 10 oder Anspruch 13, wonach das Verfahren außerdem den Schritt der Aktivierung der automatischen Notbremsung (62; 68) umfasst.

## Revendications

1. Système de libération/rétraction de pédale de pied pour un véhicule (10), ledit système comprenant :
au moins une pédale de pied (44) ;
un actionneur (46) associé à ladite au moins une pédale de pied pour libérer/rétracter ladite au moins une pédale de pied de son support, **caractérisé par**
un capteur de pied (45) associé à ladite au moins une pédale de pied pour déterminer si un pied d'un opérateur de véhicule est sur ladite au moins une pédale ; et
une unité de commande de système (20) adaptée pour communiquer avec ledit capteur de pied (45) et ledit actionneur (46), ladite unité de commande de système étant en outre adaptée pour recevoir des données indiquant qu'une collision entre le véhicule et un objet étranger (16) est imminente, lesdites données comprenant des informations concernant la sévérité anticipée de ladite collision,
dans lequel, lors de la réception desdites données, ladite unité de commande de système (20) est adaptée pour communiquer avec ledit capteur de pied (45) pour déterminer si un pied de l'opérateur de véhicule est sur ladite au moins une pédale de pied (44) et, en fonction d'au moins certaines desdites informations concernant la sévérité anticipée de ladite collision, déterminer s'il faut déployer ledit actionneur (46) pour libérer/rétracter ladite au moins une pédale de pied.

2. Système selon la revendication 1, dans lequel ladite unité de commande de système (20) est adaptée, lors de la détermination qu'un pied de l'opérateur de véhicule est sur ladite au moins une pédale de pied (44), pour déterminer le risque de blessures liées à l'accélération, et lors de la détermination qu'un risque suffisant existe, ladite unité de commande de système est adaptée pour déployer ledit actionneur (46).

3. Système selon la revendication 1, dans lequel ladite unité de commande de système (20) est adaptée, lors de la détermination qu'aucun pied de l'opérateur de véhicule n'est sur ladite au moins une pédale (44), pour déterminer le risque d'intrusion de l'au moins une pédale de pied davantage dans le véhicule.

4. Système selon la revendication 1, dans lequel ladite unité de commande de système (20) est adaptée, lors de la confirmation qu'un pied de l'opérateur de véhicule est sur ladite au moins une pédale (44), pour déterminer le risque de blessures liées à l'accélération, et lors de la détermination qu'un risque insuffisant existe, ladite unité de commande de système est adaptée pour déterminer le risque pour une intrusion de l'au moins une pédale de pied davantage dans le véhicule.

5. Système selon la revendication 3 ou la revendication 4, dans lequel ladite unité de commande de système, lors de la détermination qu'un risque suffisant pour une intrusion existe, est disposée pour déployer ledit actionneur (46).

6. Système selon la revendication 2 ou la revendication 5, dans lequel ladite unité de commande de système (20) est en outre adaptée pour activer le freinage d'urgence automatique (62 ; 68).

7. Système selon l'une quelconque des revendications précédentes, dans lequel lesdites données comprenant des informations liées à la sévérité anticipée de ladite collision sont fournies par un moyen de détection (18, 18') capable de détecter, et de distinguer entre, une collision frontale complète, une collision aile à aile et une collision décalée.

8. Système selon la revendication 7, dans lequel ledit moyen de détection comprend au moins un capteur (18') pour fournir une mesure d'accélération de direction x à ladite unité de commande de système (20).

9. Procédé pour déterminer s'il faut déployer un actionneur (46) d'un système de libération/rétraction de pédale à pied dans un véhicule (10) dans le cas d'une collision imminente entre le véhicule et un objet étranger (16), ledit procédé comprenant les étapes de :
collecte des informations concernant la sévérité anticipée de la collision ; **caractérisé en ce que** le procédé comprend en outre les étapes de :
détermination si un pied d'un opérateur de véhicule est sur une pédale de pied, et
détermination s'il faut déployer un actionneur pour libérer/rétracter la pédale de pied de son support selon qu'un pied est sur la pédale de pied et qu'au moins certaines desdites informations concernant la sévérité anticipée de la collision.

10. Procédé selon la revendication 9, dans lequel si on détermine qu'un pied est sur une pédale de pied, le procédé comprend en outre l'étape de détermination du risque de blessures liées à l'accélération (54), et de déploiement dudit actionneur lors de la détermination qu'un risque suffisant existe (60).

11. Procédé selon la revendication 9, dans lequel s'il est déterminé qu'aucun pied de l'opérateur de véhicule est sur ladite au moins une pédale, le procédé comprend en outre l'étape de détermination du risque pour une intrusion de l'au moins une pédale de pied davantage dans le véhicule (64).

12. Procédé selon la revendication 9, dans lequel s'il est déterminé qu'un pied de l'opérateur de véhicule est sur ladite au moins une pédale, le procédé comprend en outre l'étape de détermination du risque de blessures liées à l'accélération (54), et lors de la détermination qu'un risque insuffisant existe, le procédé comprend en outre l'étape de détermination du risque d'intrusion de l'au moins une pédale de pied davantage dans le véhicule (64).

13. Procédé selon la revendication 11 ou la revendication 12, dans lequel lors de la détermination qu'un risque suffisant pour une intrusion existe, le procédé comprend en outre l'étape de déploiement dudit actionneur (66).

14. Procédé selon la revendication 10 ou la revendication 13, dans lequel ledit procédé comprend en outre l'étape d'activation du freinage de secours automatique (62 ; 68).
